# EUROPEAN PATENT APPLICATION

(11) **EP 2 950 048 A1**
(43) Date of publication of application: **02.12.2015**
(21) Application number: 15001565.9
(22) Date of filing: 22.05.2015
(51) Int. Cl.: G01C 21/36

(54) **SYSTEM AND METHOD FOR PROVIDING GEOGRAPHICALLY BASED SOUND CUES TO A USER OF A MOBILE DEVICE**

(30) Priority: 26.05.2014 IL 23280214
(71) Applicant: Deutsche Telekom AG, 53113 Bonn (DE)
(72) Inventor: Elovici, Yuval, Arugot (IL); Chizi, Barak, Ashkelon (IL); Mimran, David (Dudu), Tel Aviv (IL); Shapira, Bracha, Beer Sheva (IL)
(74) Representative: Graf von Stosch, Andreas

(57) **Abstract**

The invention relates to a system and method for providing geographically-based sound cues to a user of a mobile device.

## Description

### Field of Invention

The field of the invention relates in general to features and applications of mobile devices. More specifically, the invention relates to a system and method for providing geographically-based sound cues to a user of a mobile device.

### Background of the Invention

GPS based information is widely used and provided by applications of mobile e.g., for assisting a user of a mobile device in finding his driving route to a target location. During his way to his target location, the driver naturally passes other potential points of interest that are well known to the operator of the navigation application, and are located within some short range from the route to the target. Many operators of navigation applications exploit this knowledge to inform, and possibly attract the driver to these points of interest. This is done by the operator, for example, to obtain some advertising income that may assist him in operating the navigation application. For example, operators of navigation applications typically introduce to the users information relating to gas stations, cinemas, restaurants, museums, parking lots, parks, and more. All these points of interest are typically displayed on the map, or in a balloon-type message during the navigation of the user to the target. The points of interest typically appear on the map as visual cues as long as the user is within a predefined range from the respective location. Although less common, navigation applications are also used by walkers, and such GPS-based points of interest information may also be found useful for them.

Many users of mobile devices tend to use earphones while walking. This is done, for example, to listen to music, a radio program, to conduct a phone call, or just to protect their ears from cold winds. While walking, users of mobile devices tend less to operate a navigation application, as the area is in many cases familiar to them. Therefore, they are less exposed to the map of the area, and are even less exposed to the geographically-based visual cues of points of interest that, as said, are typically introduced within navigation applications for drivers. As a result of this situation, in many cases walking-type users of mobile devices miss those points of interest, and the operator misses some potential source of income.

It is therefore an object of the present invention to provide that are more suitable to walkers.

It is another object of the present invention to provide said geographic cues of points of interest in a new form which is typically adapted to walkers-type users of mobile devices.

It is still another object of the present invention to provide said cues in an extended form compared to the prior art cues. More specifically, it is an object of the invention to include within said new type of cues direction information to the point of interest in a manner which is most intuitive to the user.

It is still another object of the present invention to provide said cues to points of interest in a manner which is particularly adapted to users of mobile devices wearing earphones.

It is still another object of the present invention to provide said geographically-based cues to points of interest in a manner which is independent of outdoor high illumination that in many cases reduces the visibility of screens of mobile devices.

Other objects and advantages of the present invention will become apparent as the description proceeds.

### Brief Description of the Drawings

In the drawings:

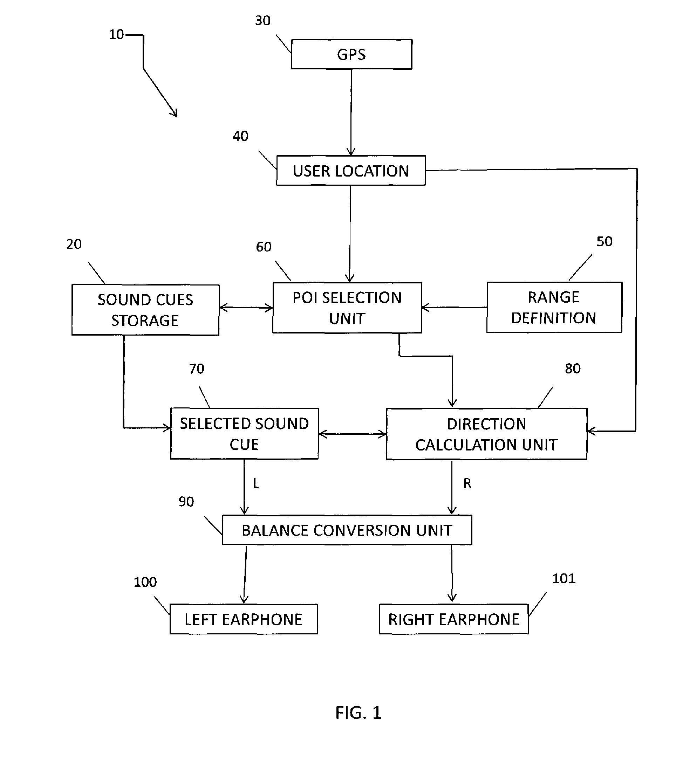

- Fig. 1 illustrates in a block diagram form the structure of the system of the invention.

### Summary of the Invention

The invention relates to a method for providing geographically based sound cues to a user of a mobile device, each sound cue informs the user on a nearby point of interest, the method comprises the steps of: (a) assigning to each point of interest a typical sound cue; (b) storing all said points of interest sound cues, each with its respective geographical coordinates, at a sound cue storage; (c) predefining a maximal range; (d) monitoring the location of the mobile device, and the progression direction vector of the user carrying said device; (e) upon arrival of the user at a distance less than said maximal range from a point of interest, extracting the respective point of interest sound cue from said storage; (f) based on said user current location, determining a direction vector leading from the user current location to said point of interest; (g) based on said user progression direction vector and said determined direction vector to the point of interest, calculating a right-left balance level for said sound cue, said balance level emphasizes the side at which the point of interest is located relative to the user; and (h) sounding said sound cue at the right and left earphones of the device at respective levels that are based on said calculated right-left balance.

Preferably, each of said sound cues is designed to provide a typical sound which will cause association of the user with the nature of the point of interest.

Preferably, said sound cues storage is located outside of the device.

Method according to claim 1, wherein one or more of said sound cues are stored within the device.

Preferably, the total volume of the sound cue which is provided at the right and left earphones is inversely proportional to the distance of the user from the point of interest.

Preferably, the method is particularly adapted for a walker user.

The invention also related to a system for providing geographically based sound cues to a user of a mobile device, each sound cue hints to the user on a nearby point of interest, the system comprises: (a) a storage for storing plurality of point of interest sound cues and the respective geographic coordinates of each point of interest; (b) a GPS and a monitoring unit for determining the current location of the user carrying the mobile device, and his progression direction; (c) a setup storage for storing a predefined maximal range; (d) a point of interest selection unit for selecting and extracting from said cues storage, based on said current location of the user and said predefined maximal range, a single sound cue which relates to a point of interest which is located within said maximal range from the user; (f) a direction calculation unit for determining, based on said user current location, a direction vector leading from the user current location to said selected point of interest; (g) a balance conversion unit for, based on said user progression direction vector and said determined direction vector to the point of interest, calculating a right-left balance level for said selected sound cue, said balance level emphasizes the side at which the point of interest is located relative to the user carrying the device; and (h) means for sounding said selected sound cue at the right and left earphones of the device at respective right and left levels that are based on said calculated right-left balance.

Preferably, each of said sound cues is designed to provide a typical sound which will cause association of the user with the nature of the point of interest.

Preferably, said sound cues storage is located outside of the device.

Preferably, one or more of said sound cues are stored within the device.

Preferably, the sounding means provides the sound cue at the right and left earphones respectively at a total volume which is inversely proportional to the distance of the user from the point of interest.

Preferably, the system is particularly adapted for a walker user.

### Detailed Description of Preferred Embodiments

As noted above, typical navigation applications provide visual cues of points of interest on the map directing a driver to a target. However, these visual cues are typically not suitable for walkers, for the following reasons: (a) walkers do not watch the display while they are walking (b) displays of mobile devices have limited visibility when high illumination exists outdoors; in any case, an increase of the screen brightness results in fast exhaustion of the device battery; (c) moreover, navigation applications are not suited for operation in closed and limited space locations, such as malls. To overcome the above drawbacks, the present invention provides to a user of a mobile device geographic-type cues in a more convenient and more intuitive manner compared to the prior art.

Fig. 1 shows in a block diagram form a structure of a system 10 for providing sound cues of points of interest to a walker, according to an embodiment of the present invention. Initially sound cues are recorded for each of the plurality of points of interest, and stored within the cues sound storage 20, together with their respective geographic coordinates. Each sound cue is selected to reflect the nature of the point of interest, for example:
a. For a water fall, the sound cue may include a sound of flowing or falling water;
b. For an Italian or a Mediterranean restaurant, the sound cue may include Italian, or Mediterranean music respectively;
c. For a nature park, the sound cue may include a sound of birds;
d. For a tennis stadium, the sound cue may include a record of a tennis match;
e. For a concert hall, the sound cue may include classical music; etc.

Each of the sound cue may last about 10-30 seconds.

GPS unit 30 continuously provides the user location coordinates to user location unit 40. The user location unit 40 in turn continuously conveys the user location to a Point of Interest (hereinafter "POI") selection unit 60, and it further calculates the user progression direction vector. The POI selection unit receives a range definition from range definition unit 50. More specifically, the range definition contains a maximal range from a point of interest, as defined by the user. Having said maximal range definition 50, and the present location 40 of the user, the POI selection unit accesses the sound cues storage 20 to find all the POIs that are located within said maximal range, and further selects a single sound cue from said cue storage. Said selection is made randomly or according to some predefined algorithm. The selected sound cue is conveyed to sound cue unit 70, together with its associated location coordinates.

The direction calculation unit 80 receives the user location and a direction progression vector from the user location unit 40, and the respective POI coordinates of the selected sound cue from selected sound cue unit 70, and it calculates the direction vector from the present user location to the selected point of interest. In such a manner, unit 80 in fact determines whether the selected point of interest is located to the right of the walker, to his left, in front, or rear of the user, or any combination thereof. The calculated direction vector to the POI is conveyed to balance conversion unit 90. The balance conversion unit 90 also receives the selected sound cue from POI selection unit 60, typically in a mono sound form, and based on this information it calculates a respective balance rate for the sound cue, and based on this rate, the cue sound total volume is divided between the right and left channels, leading to right and left earphones 100 and 101 respectively. For example, if the POI is located exactly to the right of the walker, the cue sound will be provided only to the right earphone. Alternatively, if the POI is located only mostly, but not exactly to the right, the sound will be balanced accordingly.

In such a manner, the walker-type user of a mobile phone receives the POI sound cue in a form which is balanced based to the calculated direction to the POI. More specifically, the cue which is provided to the user via his earphones reflects not only the nature of the POI, but also the direction to the POI. This manner of cue provision is very intuitive and convenient, and is particularly adapted to the environment and situation at which the walker is located.

In one alternative on the invention, the volume of the sound cue is also depends on the distance from the POI. More specifically, the total volume of the cue may increase as the user becomes closer to the POI, and the balance between the two channels may change as the orientation of the user with respect to the POI changes.

The invention may be provided in a form of an application on a mobile phone. The functionalities between the various units of the invention may be divided between a remote server and the mobile device itself, in a manner well known to those skilled in the art. For example, having knowledge of the general location of the user, the various most relevant sound cues may be pre-stored at the device of the user, to reduce the need for real time transfer of somewhat large sound files.

Furthermore, in closed locations (such as malls), where the GPS is not so effective, other equivalent means may be used to determine the user location and orientation.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

## Claims

1. A method for providing geographically based sound cues to a user of a mobile device, each sound cue informs the user on a nearby point of interest, the method comprises the steps of:
a. assigning to each point of interest a typical sound cue;
b. storing all said points of interest sound cues, each with its respective geographical coordinates, at a sound cue storage;
c. predefining a maximal range;
d. monitoring the location of the mobile device, and the progression direction vector of the user carrying said device;
e. upon arrival of the user at a distance less than said maximal range from a point of interest, extracting the respective point of interest sound cue from said storage;
f. based on said user current location, determining a direction vector leading from the user current location to said point of interest;
g. based on said user progression direction vector and said determined direction vector to the point of interest, calculating a right-left balance level for said sound cue, said balance level emphasizes the side at which the point of interest is located relative to the user; and
h. sounding said sound cue at the right and left earphones of the device at respective levels that are based on said calculated right-left balance.

2. Method according to claim 1, wherein each of said sound cues is designed to provide a typical sound which will cause association of the user with the nature of the point of interest.

3. Method according to claim 1, wherein said sound cues storage is located outside of the device.

4. Method according to claim 1, wherein one or more of said sound cues are stored within the device.

5. Method according to claim 1, wherein the total volume of the sound cue which is provided at the right and left earphones is inversely proportional to the distance of the user from the point of interest.

6. Method according to claim 1, which is particularly adapted for a walker user.

7. System for providing geographically based sound cues to a user of a mobile device, each sound cue hints to the user on a nearby point of interest, the system comprises:
a. a storage for storing plurality of point of interest sound cues and the respective geographic coordinates of each point of interest;
b. a GPS and a monitoring unit for determining the current location of the user carrying the mobile device, and his progression direction;
c. a setup storage for storing a predefined maximal range;
d. a point of interest selection unit for selecting and extracting from said cues storage, based on said current location of the user and said predefined maximal range, a single sound cue which relates to a point of interest which is located within said maximal range from the user;
e. a direction calculation unit for determining, based on said user current location, a direction vector leading from the user current location to said selected point of interest;
f. a balance conversion unit for, based on said user progression direction vector and said determined direction vector to the point of interest, calculating a right-left balance level for said selected sound cue, said balance level emphasizes the side at which the point of interest is located relative to the user carrying the device; and
g. means for sounding said selected sound cue at the right and left earphones of the device at respective right and left levels that are based on said calculated right-left balance.

8. System according to claim 7, wherein each of said sound cues is designed to provide a typical sound which will cause association of the user with the nature of the point of interest.

9. System according to claim 7, wherein said sound cues storage is located outside of the device.

10. System according to claim 7, wherein one or more of said sound cues are stored within the device.

11. System according to claim 7, wherein sounding means provides the sound cue at the right and left earphones respectively at a total volume which is inversely proportional to the distance of the user from the point of interest.

12. System according to claim 7, which is particularly adapted for a walker user.
